# EUROPÄISCHE PATENTSCHRIFT

(11) **EP 0 607 571 B1**
(45) Veröffentlichungstag und Bekanntmachung des Hinweises auf die Patenterteilung: **15.11.1995**
(21) Anmeldenummer: 93120132.1
(22) Anmeldetag: 14.12.1993
(51) Int. Cl.: F16G 11/12, B63B 15/02

(54) **Wantenspanner**
Stay tensioner
Tendeur de hauban

(30) Priorität: 21.12.1992 DE 9217435 U
(43) Veröffentlichungstag der Anmeldung: 27.07.1994
(73) Patentinhaber: HERMAN GOTTHARDT GmbH, D-22761 Hamburg (DE)
(72) Erfinder: Glasa, Stefan, D-22559 Hamburg (DE)
(74) Vertreter: Richter, Werdermann & Gerbaulet

(56) Entgegenhaltungen:
- AU-D- 4 656 672
- GB-A- L9 503
- GB-A- 714 774
- US-A- 4 394 097

## Beschreibung

Die Erfindung betrifft einen einspindeligen Wantenspanner mit einem spannbaren Gewindekupplungsstück zwischen einem Draht (einer Wante) und einer Verbindung zu einem Anbindungsteil, wobei ein von einem Drahtende des Drahtes abgewandtes Ende des Gewindekupplungsstücks mit dem Anbindungsteil eine formschlüssig ineinandergreifende Profilverbindung bildet, die durch eine über einen Außenmantel eine Hülse des Gewindekupplungsstücks lösbar geschobene Ringhülse gesichert ist.

Wantenspanner, insbesondere für Segelyachten, sind in doppelspindiger als auch einspindeliger Ausführungsform bekannt.

Aus der DE-A-26 23 576 ist ein Wantenspanner bekannt, bei dem ein Spannhebel vorgesehen ist, der verschiedene Einkerbungen aufweist, in die ein Spannring, der mit der Want oder dem Steg verbunden ist, einlegbar ist. Die Bedienung eines solchen Wantenspanners erfolgt dadurch, daß der mit der Want verbundene Spannring in eine Einkerbung des abgespreizten Spannhebels eingelegt wird, worauf der Hebel in die an den Spannkörper anliegende Stellung eingeschwenkt wird, wodurch die Spannung mit der gewünschten Verbindungslänge zwischen Want und Deck bewirkt wird, wobei es möglich ist, den Spannhebel durch eine Schutz- und Fixierhülse zu sichern.

Die DE-A-29 38 525 zeigt eine Ausführungsform eines Spanngliedes, bei dem vorgesehen ist, daß das Ende einer Stange und die Innenfläche einer Hülse Abschnitte aufweisen, die Aussparungen und Erhöhungen bilden und die mit diesen ineinandergreifen. Diese Stange und die Hülse sind von einer Kupplungsbuchse umgeben, die über das Ende der Stange hinausragt und sich an einer Anschlagfläche abstützt.

Bei einem bekannten Spannschloß ist vorgesehen, daR zwischen einem Spannkörper und Gewindemuffen eine Kunststoff- oder Gummischicht angeordnet ist, wobei vorgesehen ist, daß sich bei auftretender Belastung der Kunststoff oder das Gummi elastisch dehnt und nach Beendigung der Belastung in die ursprüngliche Lage zurückkehrt, um das Ertragen von Spannungsspitzen zu ermöglichen (DE-A-35 17 537).

Bei einem anderen bekannten Spanner ist zur Erzielung eines Längenausgleiches ein Federelement vorgesehen (GB-A-21 67 721).

Andere bekannte Wantenspanner mit einer Doppelspindel, d.h. einer Spindel mit je einem Links- und Rechtsgewinde an den Endseiten, sind axial drehbar in einer Hülse mit Innengewinde angeordnet. Diese Wantenspanner werden mit Splinten oder Kontermuttern gesichert, um ein unbeabsichtigtes Verdrehen oder Lösen zu verhindern.

Weiterhin sind Wantenspanner bekannt, die nur mit einer Spindel arbeiten und - anstelle des zweiten Gewindes - ein Gegenlager besitzen. Infolge der hohen auftretenden Kräfte muß dieses Gegenlager entsprechend stark dimensioniert werden, was sich insbesondere in einem hohen Gewicht dieses Gegenlagers ungünstig niederschlägt.

Beide Arten von bisher bekannten Wantenspannern sind entweder wegen des hohen Materialbedarfs oder wegen der notwendigen gegenläufigen Gewinde (Links-/Rechtsgewinde) kostenaufwendig in der Herstellung.

Ein aus der GB-A-9503 (A.D.1911) bekannter Drahtspanner besteht aus einer beweglichen Öse mit einem Schaft mit einer Aussparung, die sich unmittelbar unter dem Kopf befindet sowie einer Aussparung oder einer Reihe von rillenförmigen Aussparungen am Schaft dieser Öse. Diese Öse dreht sich und wird mittels Wälznuten oder -aussparungen in der Hülse gehalten, die mit den Aussparungen im Schaft der Öse übereinstimmen, wodurch sich die Öse in den Nuten drehen kann. Die Nuten in der Hülse lassen sich mit Drahtringen befestigen, die in die Nuten hineingetrieben sind. Über die Ringe und die Hülse kann eine andere, äußere Hülse aufgesetzt werden, die an das untere Ende des Schafts der Öse heranreicht und damit die innere Hülse verstärkt. Die innere Hülse am entgegengesetzten Ende besitzt eine Buchse mit Innengewinde. Dieses Ende ist entweder glatt oder wie die innere Hülse am anderen Ende des Spanners mit Aussparungen versehen. Die Buchse kann sowohl fest aufgesetzt oder mit Aussparungen versehen sein, um ein Herausdrehen oder Herausziehen der Buchse zu verhindern. Die Aussparungen an diesem Ende der Hülse sind mit Drahtringen und einer äußeren Hülse versehen, die dem bereits erwähnten anderen Ende entspricht. An der drehbaren Öse befindet sich zur Aufnahme eines Steckgriffs ein Loch im Spanner. Dieses Loch erstreckt sich sowohl durch die innere wie durch die äußere Hülse. Eine Schraube mit einer Öse, die der am entgegengesetzten Ende befindlichen Öse gleicht und die mit einem der Buchse entsprechend ausgebildeten Gewinde versehen ist, ist am Buchsenende des Spanners angebracht. Die Länge dieser Schraube wird von der Länge des Spanners bestimmt. Diese Schraube hat am Ende einen kleinen Schlitz, der so breit ist, daß ein Splint durch die Löcher in der Hülse und durch den Schlitz paßt, so daß er durch die Hülse und die Schraube des Spanners hindurchgeht und ein Einklemmen verursacht. Auf dem Teil der inneren Hülse zwischen dem Steckgriffloch und dem Buchsenende des Spanners befinden sich einige Löcher, die spiralförmig durch die Hülse hindurchgebohrt wurden. Anstelle dieser Löcher können auch Schlitze in der Hülse verwendet werden. Diese Bau- und Arbeitsweise entspricht den bekannten und in allen Bereichen eingesetzten Drahtspannern.

Es ist daher Aufgabe der vorliegenden Erfindung, einen einspindeligen Wantenspanner der eingangs genannten Art zu schaffen, der bedienungssicher, aber auch leicht handhabbar ist und der im Aufbau klein und leicht ist.

Diese Aufgabe wird durch den im Anspruch 1 beschriebenen einspindeligen Wantenspanner gelöst.

Es ist dabei vorgesehen, daß das Gewindekupplungsstück mit seinem dem Gewindeende abgewandten Ende und dem Anbindungsteil eine formschlüssig ineinandergreifende Profilverbindung bildet, die durch eine über den Außenmantel der Profilverbindung lösbar geschobene Ringhülse gesichert ist. Prinzipiell können jegliche Formschlußprofile, die nach dem Stand der Technik bekannt sind, verwendet werden, soweit in Axialrichtung des Wantenspanners ein Widerlager gebildet wird, das ein unbeabsichtigtes Auseinanderreißen der verbundenen Teile verhindert. Zusätzlich wird die über den Außenmantel der Profilverbindung geschobene Ringhülse insofern gewichtsmindernd, wie die betreffenden verbundenen Profilverbindungsteile entsprechend schwächer dimensioniert werden können.

Die spezielle erfindungsgemäße Ausführungsform ist folgendermaßen aufgebaut:
Das mit dem Drahtende fest verbundene Außengewindeprofil greift in ein mit einem Innengewinde ausgestattetes erstes Ende einer Hülse ein, deren zweites Ende geschlitzt ist und profilartige Erhebungen und/oder Ausnehmungen im Innenmantel besitzt, die im Verbindungszustand formschlüssig in entsprechend ausgeformten Ausnehmungen und/oder Erhebungen eines Anbindungsteils lösbar eingreifen, wobei das längsgeschlitzte Ende durch die lösbar aufgeschobene Ringhülse gesichert wird. Bei dieser Ausführungsform stehen den Erhebungen der Hülse entsprechende Nuten gegenüber bzw. greifen in sie ein und umgekehrt. Der Aufbau kann prinzipiell auch insofern "spiegelsymmetrisch" ausgeführt werden, als mit dem Drahtende anstelle des Außengewindeprofils eine Hülse mit Innengewinde verbunden ist. Entsprechend müssen die übrigen Teile dann angepaßt werden, ohne daß das Prinzip der Formschlußverbindung, die durch einen äußeren übergeschobenen Ring gesichert ist, verlassen wird.

Die Erhebungen und/oder Ausnehmungen bestehen im einfachsten Fall aus geschlossenen kreisförmigen Rippen und/oder Nuten, die konzentrisch um die Längsachse in Reihe angeordnet sind.Die Hülse kann entweder aus zwei Schalenhälften bestehen oder nur endseitig längsgeschlitzt sein, wobei sie vorzugsweise mehrere Längsschlitze aufweist. Um eine Halterung der Profilverbindung über die gesamte Länge zu bilden, ist die Ringhülse etwa ebenso lang wie die vorbeschriebene Hülse, vorzugsweise geringfügig kürzer.

Zur Sicherung besitzt die Hülse an ihrem das Innengewinde aufweisenden Ende ein Außengewinde, worüber eine Kontermutter geschraubt ist. Die Kontermutter wirkt vorzugsweise auf einen Klemmkonus mit einem kleineren freien Innendurchmesser als dem der Hülse ein, durch den der Draht und die Hülse zueinander fixierbar sind. Nach einer weiteren Ausführungsform ist der Klemmkonus geschlitzt.

Zur Bedienungserleichterung weisen die Hülse, die Kontermutter und/oder der Draht oder eine hierauf unlösbar geklemmte weitere Hülse abgeflachte Flächen für einen Drehschlüssel auf.

Ein Ausführungsbeispiel der Erfindung ist in den Zeichnungen dargestellt. Es zeigen
- Fig. 1: zum Teil in einer Schnittdarstellung eine Ansicht eines einspindeligen Wantenspanners,
- Fig. 2: eine Schnittdarstellung entlang der Linie C-C nach Fig. 1, und
- Fig. 3: eine Schnittdarstellung entlang der Linie D-D nach Fig. 1.

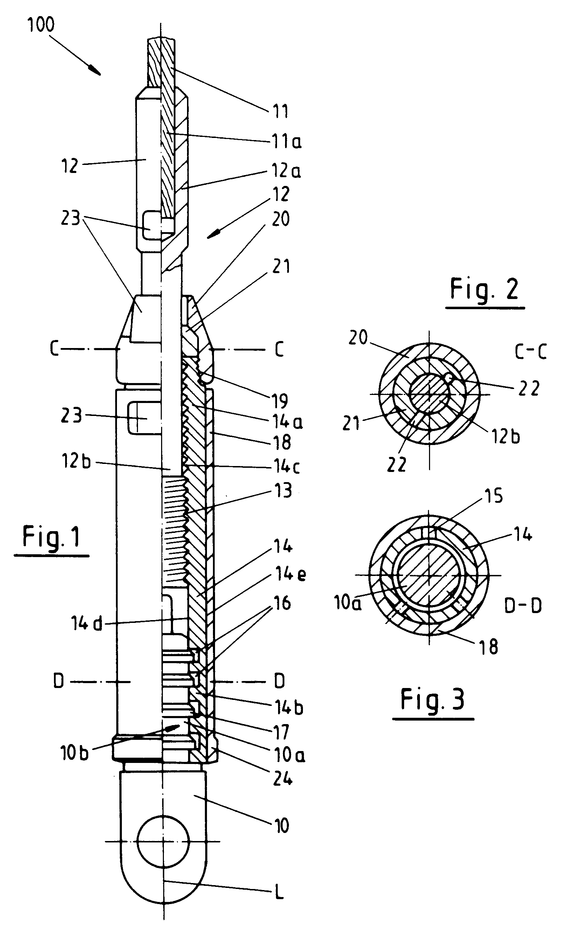

Wie aus Fig. 1 ersichtlich, sollen durch den Wantenspanner 100 ein Anbindungsteil 10 und ein Draht 11 (eine Wante) miteinander verbunden werden. Der Draht 11 besitzt ein an seinem Ende 11a unlösbar aufgeklemmtes Gewindekupplungsstück 12, das das Drahtende 11a mit einem Hülsenteil 12a hülsenartig umgreift und an seinem freien gewindebolzenartigen Ende 12b ein Außengewindeprofil 13 aufweist. Dieses Außengewindeprofil 13 greift in ein entsprechend ausgebildetes Innengewinde 14c einer Hülse 14 ein, worüber ein Nachspannen oder Lockern der zu verbindenden Teile 10 und 11 möglich ist.

Im unteren Teil besitzt die Hülse 14 drei Längsschlitze 15 (siehe Fig. 3), die sich parallel zur Längsachse erstrekken. Der Innenmantel 14d der Hülse 14 ist mit einem Profil ausgestattet, das formschlüssig mit einem entsprechend angepaßten Profil des Anbindungsteiles 10 zusammenwirkt. In der dargestellten Version besitzt der Innenmantel 14d mehrere in Reihe hintereinander angeordnete Nuten 16, in die ringförmige Rippen 17 auf dem Außenmantel 10b des bolzenartigen Verbindungskörpers 10a des Anbindugnsteils 10 eingreifen. Über den Außenmantel 14e der Hülse 14 ist eine Ringhülse 18 geschoben, deren Innendurchmesser so bemessen ist, daß die Ringhülse 18 unter Zusammenschieben der Längsschlitze 15 die Hülse 14 auf den oberen Teil des Anbindungsteiles 10 preßt, so daß die ringförmigen Rippen 17 in die Nuten 16 der Hülse gleiten bzw. greifen. Die Ringhülse 18 dient gleichzeitig als Sicherung, die ein Wiederaufspreizen der Hülse 14 verhindert. Die Länge der Ringhülse 18 ist derart abgestimmt, daß sie kurz unter der oberen Kante der Hülse 14 endet. Dort befindet sich ein Außengewinde 19 der Hülse 14, worüber eine Kontermutter 20 gestülpt und befestigt ist, mit der durch Drehen ein Klemmkonus 21 betätigbar ist, der geschlitzt ist (siehe Schlitz 22 in Fig. 2). Der innere Durchmesser des Klemmkonus 21 ist kleiner als der Außendurchmesser des gewindefreien Teils des Gewindebolzenteils 12b. Die Abstufung verhindert ein zu weites Herausdrehen des Gewindebolzenteils 12b am Ende der Hülse 14, so lange die Kontermutter 20 in Eingriff bleibt. Zur besseren Betätigung besitzen die Hülse 12, die Kontermutter 20 sowie die Hülse 18 bzw. 14 Schlüsselflächen 23.

Der Wantenspanner 100 wird folgendermaßen betätigt: Bei gelöster Kontermutter 20 und abgeschobener Ringhülse 18 wird zunächst eine Verbindung zwischen dem Außengewinde 13 und dem Innengewinde 14c der Hülse 14 durch Aufschrauben hergestellt. Anschließend wird in das untere offene Ende der Hülse 14, ggf. unter Aufspreizung auf den Zapfen (Verbindungskörper 10a) des Anbindungsteils 10 mit den ringförmigen Rippen 17 geschoben, die dort in Nuten 16 eingreifen. Schließlich wird die Ringhülse 18 über den Außenmangel der Hülse 14 nach unten geschoben, wobei ein Endwulst 24 hilfreich sein kann. Hierdurch schließen sich die Längsschlitze 15, und die Verbindung zwischen dem Anbindungsteil 10 und der Hülse 14 wird gesichert.

## Patentansprüche

1. Einspindeliger Wantenspanner (100) mit einem spannbaren Gewindekupplungsstück (12) zwischen einem Draht (11) (einer Wante) und einer Verbindung zu einem Anbindungsteil (10), wobei ein von einem Drahtende (11a) des Drahtes (11) abgewandtes Ende (14b) des Gewindekupplungsstücks (12) mit dem Anbindungsteil (10) eine formschlüssig ineinandergreifende Profilverbindung (16, 17) bildet, die durch eine über einen Außenmantel einer Hülse (14) des Gewindekupplungsstücks (12) lösbar geschobene Ringhülse (18) gesichert ist,
dadurch gekennzeichnet,
daß das Gewindekupplungsstück (12) aus einem Hülsenteil (12a) zur Verbindung mit dem Drahtende (11a), einem Gewindebolzenteil (12b) und der Hülse (14) mit Innengewinde (14c) besteht, und daß das mit dem Drahtende (11a) fest verbundene Gewindebolzenteil (12b) mit einem Außengewindeprofil (13) in ein mit einem Innengewinde (14c) ausgestattetes erstes Ende (14a) der Hülse (14) eingreift, deren zweites Ende (14b) längsgeschlitzt (15) ist und profilartige Erhebungen und/oder Ausnehmungen (16) im Innenmantel besitzt, die im Verbindungszustand formschlüssig in entsprechend ausgeformte Ausnehmungen und/oder Erhebungen (17) des bolzenartigen Verbindungskörpers (10a) des Anbindungsteils (10) lösbar eingreift, wobei das längsgeschlitzte Ende durch die lösbar aufgeschobene Ringhülse (18) gesichert ist.

2. Wantenspanner nach Anspruch 1,
dadurch gekennzeichnet,
daß die Erhebungen und/oder Ausnehmungen aus geschlossenen kreisförmigen Rippen (17) und/oder Nuten (16) bestehen.

3. Wantenspanner nach Anspruch 1 oder 2,
dadurch gekennzeichnet,
daß die Hülse (14) aus zwei Schalenhälften besteht oder nur endeitig längsgeschlitzt ist, und vorzugsweise mehrere Längsschlitze (15) aufweist.

4. Wantenspanner nach einem der Ansprüche 1 bis 3,
dadurch gekennzeichnet,
daß die Ringhülse (18) etwa die Länge der Hülse (14) aufweist.

5. Wantenspanner nach einem der Ansprüche 1 bis 4,
dadurch gekennzeichnet,
daß die Hülse (14) an ihrem das Innengewinde (14c) aufweisenden Ende (14a) ein Außengewinde (19) besitzt, worüber eine Kontermutter (20) geschraubt ist.

6. Wantenspanner nach Anspruch 5,
dadurch gekennzeichnet,
daß die Kontermutter (20) auf einem Klemmkonus (21) mit einem kleineren freien Innendurchmesser als dem der Hülse (14) und/oder dem Außendurchmesser des Gewindebolzenteils (12b) einwirkt, durch den der Draht (11) und die Hülse (14) zueinander fixierbar sind.

7. Wantenspanner nach Anspruch 6,
dadurch gekennzeichnet,
daß der Klemmkonus (21) geschlitzt (22) ist.

8. Wantenspanner nach einem der Ansprüche 1 bis 7,
dadurch gekennzeichnet,
daß die Hülse (14), die Kontermutter (20) und/oder der Draht(11) oder ein hierauf unlösbar geklemmtes weiteres Hülsenteil (12a) abgeflachte Flächen (23) für einen Drehschlüssel aufweisen.

## Claims

1. Single-spindle stay tensioner (100) with a tensionable scrtew joint coupling (12) between a wire (11) (a stay) and a connection to an attachment part (10), wherein one end (14b) of the screw joint (12) facing away from one wire end (11a) of the wire (11), together with the attachment part (10), forms a positively locking inter-meshing profile connection (16,17), which is secured by means of a ollet (18) slipped detachably over an external shell of a sleeve of the screw joint coupling (12),
**characterized in that**
the screw joint coupling (12) is comprised of a sleeve portion (12a) for the connection with the wire end (11a), a threaded bolt portion (12b) and the sleeve with the internal thread (14c) and in that the threaded bolt portion (12b) rigidly connected with the wire end (11a), engages, with an external thread profile (13), into a first end (14a) fitted with an internal thread (14c) of the sleeve (14), whose second end (14b) is longitudinally slotted and possesses profile-like prominent points and/or recesses (16) in the inner shell which, in the connected state, detachably in a positively locking fashion into pertinently configured recesses and/or prominent points (17) of the bolt-like connection member (10a) of the attachment part (10), in which case the longitudinally slotted end is secured by means of the detachably slipped-on collet (18).

2. Stay tensioner according to Claim 1,
**characterized in that**
the prominent points and/or recesses are comprised of closed circular ribs (17) and/or grooves (16).

3. Stay tensioner according to either Claim 1 or 2,
**characterized in that**
the sleeve (14) is comprised of two shell halves or is longitudinally slotted on one side only and preferably possesses several longitudinal slots (15).

4. Stay tensioner according to any of Claims 1 to 3,
**characterized in that**
the collet (18) possesses approximately the length of the sleeve (14).

5. Stay tensioner according to any of Claims 1 to 4,
**characterized in that,**
the sleeve (14), on its end (14a) provided with the internal thread (14c), is constructed with an external thread (19), onto which a lock nut (20) is screwed.

6. Stay tensioner according to Claim 5,
**characterized in that**
the lock nut (20) acts upon a cone clamp (21) having a smaller free internal diameter than that of the sleeve (14) and/or the external diameter of the threaded bolt portion (12b), by means of which the wire (11) and the sleeve (14) can be reciprocally fixated.

7. Stay tensioner according to Claim 6,
**characterized in that**
the cone clamp (21) is slotted (22).

8. Stay tensioner according to any of Claims 1 to 7,
**characterized in that**
the sleeve (14), the lock nut (20) and/or the wire (11) or a further sleeve portion (12a) undetachably and clampingly mounted hereupon, possess flattened surface areas (23) for a turn handle.

## Revendications

1. Tendeur de hauban (100) à une broche avec une pièce d'accouplement filetée (12) tendable entre un fil métallique (11) (un hauban) et une jonction à une pièce d'attache (10), une extrémité (14b) de la pièce d'accouplement filetée (12), qui est détournée d'une extrémité (11a) du fil métallique (11), formant avec la pièce d'attache (10) un assemblage profilé (16, 17), qui s'engrène de manière clabotée, qui est fixé par une douille annulaire (18) enfilée de manière amovible sur une enveloppe extérieure d'une douille (14) de la pièce d'accouplement filetée (12),
caractérisé en ce
que la pièce d'accouplement filetée (12) est constituée par une partie douille (12a) pour la jonction avec l'extrémité (11a) du fil métallique, une partie en boulon fileté (12b) et la douille (14) avec le filet intérieur (14c) et que la partie en boulon fileté (12b), qui est reliée de manière fixe à l'extrémité (11a) du fil métallique, s'engrène avec un profilé de filet extérieur (13) dans une première extrémité (14a) de la douille (14) équipée d'un filet intérieur (14c), dont l'autre extrémité (14b) est fendue en longueur (15) et possède des bosses et/ou des évidements (16) de type profil dans l'enveloppe intérieure qui, à l'état de jonction, s'engrènent de manière détachable de façon clabotée dans des évidements et/ou des bosses (17) du corps d'assemblage (10a) de type boulon de la pièce d'attache (10) formées de manière correspondante, l'extrémité fendue en longueur étant bloquée par la douille annulaire (18) enfilée de manière mobile.

2. Tendeur de hauban selon la revendication 1,
caractérisé en ce
que les bosses et/ou évidements sont constitués par des nervures (17) et/ou des rainures (16) circulaires fermées.

3. Tendeur de hauban selon la revendication 1 ou 2,
caractérisé en ce
que la douille (14) est constituée par deux moitiés de coque ou n'est fendue en longueur qu'à l'extrémité et, de préférence, présente plusieurs fentes longitudinales (15).

4. Tendeur de hauban selon l'une des revendications 1 à 3,
caractérisé en ce
que la douille annulaire (18) a à peu près la longueur de la douille (14).

5. Tendeur de hauban selon l'une des revendications 1 à 4,
caractérisé en ce
que la douille (14) possède, à son extrémité (14a) qui présente le filet intérieur (14c), un filet extérieur (19) au-dessus duquel un contre-écrou (20) est vissé.

6. Tendeur de hauban selon la revendication 5,
caractérisé en ce
que le contre-écrou (20) agit sur un cône de serrage (21) avec un diamètre intérieur libre plus petit que celui de la douille (14) et/ou avec le diamètre extérieur de la partie en boulon fileté (12b), cône de serrage par lequel le fil métallique (11) et la douille (14) peuvent être fixés l'un par rapport à l'autre.

7. Tendeur de hauban selon la revendication 6,
caractérisé en ce
que le cône de serrage (21) est fendu (22).

8. Tendeur de hauban selon l'une des revendications 1 à 7,
caractérisé en ce
que la douille (14), le contre-écrou (20) et/ou le fil métallique (11) ou une autre partie de douille (12a) serrée dessus de manière inamovible présentent des surfaces (23) aplaties pour une clé tournante.
